# EUROPÄISCHE PATENTANMELDUNG

(11) **EP 1 331 416 A1**
(43) Veröffentlichungstag der Anmeldung: **30.07.2003**
(21) Anmeldenummer: 02025304.3
(22) Anmeldetag: 13.11.2002
(51) Int. Cl.: F16F 1/32

(54) **Tellerfeder**

(30) Priorität: 25.01.2002 DE 10203180; 11.02.2002 DE 10205595
(71) Anmelder: Muhr und Bender KG, 57439 Attendorn (DE)
(72) Erfinder: Hesselmann, Bernfried, Dr.-Ing., 57482 Wenden (DE); Kobelev, Vladimir, Dr. rer. nat. habil., 57439 Attendorn (DE)
(74) Vertreter: Gesthuysen, von Rohr & Eggert

(57) **Zusammenfassung**

Beschrieben und dargestellt ist eine Tellerfeder (1) mit einer inneren Querschnittsstelle (2) in einem der Längsachse benachbarten Innenbereich der Tellerfeder (1), mit einer äußeren Querschnittsstelle (3) in einem randnahen Außenbereich der Tellerfeder (1) und mit einer zwischen der inneren Querschnittsstelle (2) und der äußeren Querschnittsstelle (3) liegenden weiteren Querschnittsstelle (4) im Bereich des neutralen Punktes, wobei im eingebauten Zustand der Tellerfeder (1) die maximale Beanspruchung im Bereich der inneren Querschnittsstelle (2) und/oder der äußeren Querschnittsstelle (3) liegt.

Um eine homogene Spannungsverteilung über die Tellerfeder (1) sicherzustellen, ist es erfindungsgemäß vorgesehen, daß die Tellerdicke der weiteren Querschnittsstelle (4) kleiner als die innere Querschnittsstelle (2) und kleiner als die Tellerdicke der äußeren Querschnittsstelle (3) ist.

## Beschreibung

Die Erfindung betrifft eine Tellerfeder mit einer inneren Querschnittsstelle in einem der Längsachse benachbarten Innenbereich der Tellerfeder, mit einer äußeren Querschnittsstelle in einem randnahen Außenbereich der Tellerfeder und mit einer zwischen der inneren Querschnittsstelle und der äußeren Querschnittsstelle liegenden weiteren Querschnittsstelle im Bereich des neutralen Punktes, wobei im eingebauten Zustand der Tellerfeder die maximale Beanspruchung im Bereich der inneren Querschnittsstelle und/oder der äußeren Querschnittsstelle liegt.

Tellerfedern sind kegelförmige Ringschalen, die als Einzeltellerfedern oder kombiniert zu Federpaketen oder Federsäulen in axialer Richtung belastet werden. Die Ringscheiben werden beispielsweise aus Federband ausgeschnitten. Tellerfedern zeichnen sich durch eine relativ große Federsteife aus, die durch die Art der Kombination der Tellerfedern und deren Schichtung beeinflußt werden kann.

Die Tellerfeder ist ein Bauelement mit völlig unsymmetrischer Spannungsverteilung über dem Querschnitt. Eine bis in Planlage eingefederte Tellerfeder hat in ihrer Oberseite tangential gerichtete Druckspannungen. Dagegen wird die Unterseite von tangential gerichteten Zugspannungen beansprucht. Die unsymmetrische Spannungsverteilung über dem Querschnitt führt zu einer inhomogenen Beanspruchung der Tellerfeder. Die maximalen Beanspruchungen treten an den Querschnittsecken auf, wobei die Stellen an der Unterkante der Bohrung sowie die äußere Unterkante besonders hoch beansprucht sind. Für eine geschlossene Tellerfeder ohne Bohrung, auch Linsenfeder genannt, ist die Beanspruchung im Federmittelpunkt etwa vier bis zehnmal so hoch wie an der Außenkante. Dabei ist die Materialausnutzung für die ungebohrte, geschlossene Tellerfeder bei konstanter Tellerdicke besonders ungünstig. Kommt es bei schwingend belasteten Tellerfedern zum Bruch, geht dieser infolge der hohen Zugspannungen an der Unterseite der Tellerfeder in der Regel von der zugbeanspruchten Unterseite aus.

Aufgabe der Erfindung ist es, eine Tellerfeder anzugeben, bei der die infolge einer Beanspruchung auftretenden Spannungen im wesentlichen gleichmäßig über den Querschnitt verteilt sind.

Die erfindungsgemäße Tellerfeder, bei der die zuvor hergeleitete und aufgezeigte Aufgabe gelöst ist, ist dadurch gekennzeichnet, daß die Tellerdicke der weiteren Querschnittsstelle kleiner als die Tellerdicke der inneren Querschnittsstelle und kleiner als die Tellerdicke der äußeren Querschnittsstelle ist.

Im Gegensatz zu reinen Biegefedern gibt es bei Tellerfedern keine neutrale Faser im Querschnitt, sondern nur einen neutralen Punkt, den sogenannten Stülppunkt. Im Stülppunkt treten die geringsten Spannungen auf. Wirkt auf den Einzelteller eine Federkraft, die zwischen ebenen Platten über den Umfang des oberen Innenrandes an der inneren Querschnittsstelle und des unteren Außenrandes an der äußeren Querschnittsstelle gleichmäßig verteilt eingeleitet wird, vermindert sich die freie lichte Tellerhöhe um den Federweg. Durch die Einfederung wird der Kegelwinkel verkleinert, wobei im Tellerquerschnitt tangentiale Spannungen auftreten, die an der Telleroberseite als Druckspannung, an der Tellerunterseite als Zugspannung wirksam werden; im übrigen treten vernachlässigbar geringe radiale Spannungen auf. Erfindungsgemäß ist es daher vorgesehen, die Tellerdicke an die Beanspruchung der Tellerfeder anzupassen, um eine homogene Spannungsverteilung über den Federquerschnitt sicherzustellen.

Da die größten Spannungen je nach Durchmesserverhältnis sowie dem Verhältnis der lichten Höhe zur Tellerdicke an der inneren Querschnittsstelle bzw. der äußeren Querschnittsstelle auftreten und die geringsten Spannungen im Bereich des neutralen Punktes auftreten, weist die erfindungsgemäße Tellerfeder im Bereich des neutralen Punktes eine geringere Tellerdicke auf als im Bereich der inneren bzw. der äußeren Querschnittsstelle. Eine entscheidende Rolle für die Festigkeit der Tellerfedern spielen die Bereiche an der Materialoberfläche, an denen das Material mit Zugspannungen beansprucht wird. Die maximalen Hauptnormalspannungen, also die höchsten Zugspannungen, sind über diesen Bereichen an der Materialoberfläche stets positiv. Der Höchstwert der Hauptnormalspannungen limitiert die Beanspruchungsgrenze der Tellerfeder. Durch das variable Dickenprofil der Tellerfedem ergibt sich eine gleichmäßige und im optimierten Fall konstante Hauptnormalspannung des Materials über den Bereichen der Materialoberfläche der Tellerfeder. Das Federmaterial wird dabei optimal ausgenutzt.

Für schwingungsbeanspruchte Tellerfedern soll die optimale Tellerfeder aus der Bedingung der konstanten Schädigung des Materials an der Materialoberfläche definiert werden. Das Maß für die Schädigung des Materials für die schwingbeanspruchte Tellerfeder ist üblicherweise der Schädigungsparameter nach SMITH, WATSON, TOOPER. Für die optimale schwingbeanspruchte Tellerfeder ergibt sich eine konstante Größe der Schädigungsparameter über der zugbeanspruchten Materialoberfläche. Die Wahl des Optimierungskriteriums wird eindeutig durch den Einsatz der Tellerfeder bestimmt.

Bei erfindungsgemäßen Tellerfedern können besonders hohe Federkonstanten realisiert werden.

Die bessere Materialausnutzung führt zu dem weiteren Vorteil, daß Federsäulen aus erfmdungsgemäßen Federn gegenüber bekannten Federsäulen aus Federn konstanter Tellerdicke infolge der gleichmäßigen Spannungsverteilung der erfindungsgemäßen Feder weniger schnell brechen.

Die erfindungsgemäße Tellerfeder läßt sich mit einer Mehrzahl von geometrischen Ausgestaltungen der kegelförmigen Ringschale realisieren. Gemäß einer bevorzugten Weiterbildung der Erfindung ist es jedoch besonders bevorzugt, die Tellerdicke der inneren Querschnittsstelle kleiner als die Tellerdicke der äußeren Querschnittsstelle zu realisieren. Dies bietet sich insbesondere dann an, wenn die Beanspruchung der äußeren Querschnittsstelle höher als die Beanspruchung der inneren Querschnittsstelle ist. Infolge der größeren Tellerdicke der äußeren Querschnittsstelle sind trotz der höheren Beanspruchung die resultierenden Spannungen geringer, so daß letztlich eine homogene Spannungsverteilung zwischen der inneren und der äußeren Querschnittsstelle der Tellerfeder vorliegt. Selbstverständlich ist es bei einer höheren Beanspruchung der inneren Querschnittsstelle auch möglich, die Tellerdicke der inneren Querschnittsstelle größer als die Tellerdicke der äußeren Querschnittsstelle zu realisieren. Bei gleicher Beanspruchung der inneren und der äußeren Querschnittsstellen sollte die Tellerdicke der inneren und der äußeren Querschnittsstelle im wesentlichen gleich sein.

Bei ähnlicher Beanspruchung der inneren und der äußeren Querschnittsstelle ist es weiterhin von Vorteil, das Dickenprofil der Tellerfeder zwischen der inneren und der äußeren Querschnittsstelle im wesentlichen aus zwei spiegelsymmetrischen Hälften um die weitere Querschnittsstelle, die wie bereits oben erwähnt im Bereich des neutralen Punktes des Tellerfeder liegt, zusammenzusetzen. Dadurch wird die angestrebte Homogenisierung der Spannungsverteilung in der Tellerfeder besonders gut erreicht.

Bei einer alternativen Ausführungsform der erfindungsgemäßen Tellerfeder ist vorgesehen, daß die Tellerdicke der weiteren Querschnittsstelle im wesentlichen der Tellerdicke der äußeren Querschnittsstelle entspricht und die Tellerdicke der weiteren Querschnittsstelle kleiner als die Tellerdicke der inneren Querschnittsstelle ist. Diese erfindungsgemäße Ausbildung der Tellerfeder bietet sich insbesondere dann an, wenn die Beanspruchung der Tellerfeder im Bereich der inneren Querschnittsstelle besonders hoch ist. Alternativ dazu ist es natürlich auch möglich, die Tellerdicke der weiteren Querschnittsstelle im wesentlichen der Tellerdicke der inneren Querschnittsstelle entsprechend und die Tellerdicke der weiteren Querschnittsstelle kleiner als die Tellerdicke der äußeren Querschnittsstelle zu realisieren. Diese Ausgestaltung des Dickenprofils der Tellerfeder bietet sich insbesondere bei hoher Beanspruchung der Tellerfeder im Bereich der äußeren Querschnittsstelle an.

Um der Tellerfeder eine gegenüber der äußeren bzw. inneren Querschnittsstelle unterschiedliche Tellerdicke im Bereich der weiteren Querschnittsstelle vorzugeben, ist es möglich, die Tellerdicke ausgehend von der Zugspannungsseite der Tellerfeder, nämlich von der Tellerunterseite, und/oder ausgehend von der Druckspannungsseite der Tellerfeder, nämlich von der Telleroberseite, gegenüber der Tellerdicke der äußeren und/oder der inneren Querschnittsstelle zu verjüngen. Verjüngt bedeutet in diesem Zusammenhang, daß die Tellerdicke gegenüber der Tellerdicke einer Tellerfeder mit konstanter Tellerdicke verringert ist.

Im übrigen kann es vorteilhaft sein, die erfindungsgemäße Tellerfeder mit wenigstens einer zusätzlichen Querschnittsstelle zwischen der inneren und der weiteren und/oder zwischen der weiteren und der äußeren Querschnittsstelle zu versehen, wobei die Tellerdicke der zusätzlichen Querschnittsstelle kleiner ist als die Tellerdicke der inneren Querschnittsstelle und/oder kleiner ist als die Tellerdicke der äußeren Querschnittsstelle. Die Tellerdicke kann dabei an jeder Stelle dem Spannungsverlauf der Tellerfeder angepaßt werden.

Bei üblicher Belastung der Tellerfeder, also bei einer über den Umfang des oberen Innenrandes und des unteren Außenrandes gleichmäßig eingeleiteten Kraft, ist die Tellerdicke der zusätzlichen Querschnittsstelle vorzugsweise größer als die Tellerdicke der weiteren Querschnittsstelle. Wesentlich dabei ist lediglich, daß die Tellerfeder an einer Stelle hoher Beanspruchung eine entsprechend große Tellerdicke aufweisen muß, um letztlich zu einer über die Tellerfeder homogenen Spannungsverteilung im Querschnitt zu gelangen. Die Anpassung des Dickenprofils der erfindungsgemäßen Tellerfeder ist dabei nicht nur auf die zuvor beschriebenen Ausführungsbeispiele beschränkt. Erfindungsgemäß ist es auch möglich, daß Dickenprofil der Tellerfeder an nahezu jede beliebige Beanspruchung anzupassen oder auch Bereiche vorzugeben, die aufgrund einer größeren Tellerdicke stärker belastet werden können, ohne daß es dabei zu einem Federbruch kommt.

Im einzelnen gibt es nun eine Vielzahl von Möglichkeiten, die erfindungsgemäße Tellerfeder auszugestalten und weiterzubilden. So kann die Tellerfeder gelocht oder ungelocht und/oder innen geschlitzt und/oder außen geschlitzt sein. Die Besonderheiten bzw. Vorteile gelochter und/oder geschlitzter erfindungsgemäßer Tellerfedern sind im wesentlichen aus dem Stand der Technik bekannt.

Nachfolgend werden bevorzugte Ausführungsbeispiele der erfindungsgemäßen Tellerfeder anhand der Zeichnung erläutert. In der Zeichnung zeigt
- Fig. 1: eine schematische Darstellung des Dickenprofils einer herkömmlichen Tellerfeder mit konstanter Tellerdicke zwischen der inneren und der äußeren Querschnittsstelle,
- Fig. 2: einen Querschnitt durch eine erfindungsgemäße Tellerfeder gemäß einem ersten bevorzugten Ausführungsbeispiel in einer Ansicht von unten,
- Fig. 3: eine schematische Darstellung einer gelochten Tellerfeder gemäß dem ersten bevorzugten Ausführungsbeispiel der Erfindung,
- Fig. 4: einen Querschnitt durch eine ungelochte Tellerfeder gemäß einer zweiten bevorzugten Ausführungsform der Erfindung und
- Fig. 5: eine schematische Darstellung einer ungelochten Tellerfeder gemäß der zweiten bevorzugten Ausführungsform der Erfindung.

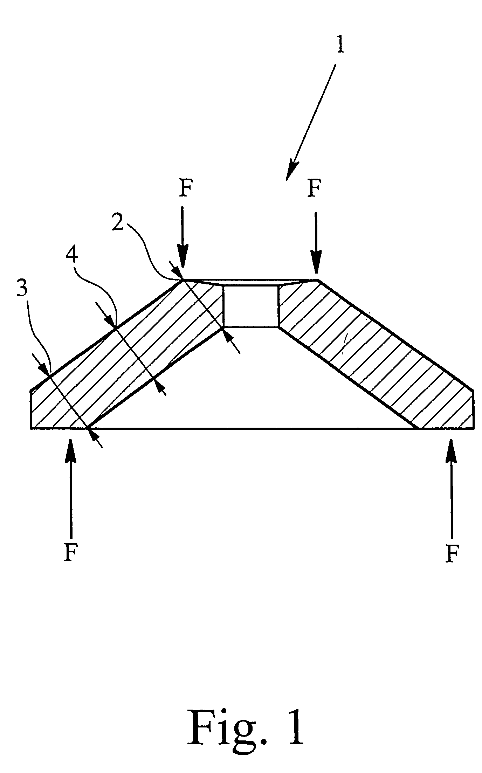

Fig. 1 zeigt eine schematische Darstellung des Dickenprofils einer herkömmlichen Tellerfeder 1 mit konstanter Tellerdicke. Es wird eine Kraft F zwischen dem Umfang des oberen Innenrandes, nachfolgend als innere Querschnittsstelle 2 bezeichnet, und dem unteren Außenrand, nachfolgend als äußere Querschnittsstelle 3 bezeichnet, gleichmäßig verteilt eingeleitet. Folglich treten die maximalen Beanspruchungen und daraus resultierend die größten Spannungen an den Querschnittsstellen 2, 3 auf. Dabei ist zu beachten, daß die maximale Druckspannung im Bereich der inneren Querschnittsstelle 2 am oberen Innenrand der Tellerfeder 1 auftritt, während die maximale Zugspannung im Bereich der äußeren Querschnittsstelle 3 am unteren Außenrand der Tellerfeder 1 auftritt.

Im Bereich des neutralen Punktes, im nachfolgenden als weitere Querschnittsstelle 4 bezeichnet, ist die Beanspruchung der Tellerfeder 1 dagegen minimal. Daraus ergibt sich, daß im Bereich des neutralen Punktes bzw. an der weiteren Querschnittsstelle 4 die aus der Beanspruchung der Tellerfeder 1 resultierenden Spannungen ebenfalls klein sind. Der neutrale Punkt liegt zwischen der Oberseite und der Unterseite der Tellerfeder 1, wobei die genaue Lage des neutralen Punktes von dem Beanspruchungsprofil der Tellerfeder 1 und deren Geometrie abhängt. Von Bedeutung ist weiterhin, daß die weitere Querschnittsstelle 4 nicht in jedem Fall mittig zwischen der inneren Querschnittsstelle 2 und der äußeren Querschnittsstelle 3 liegen muß. Die Lage der weiteren Querschnittsstelle 4 ergibt sich letztlich allein durch das Dickenprofil und die Beanspruchungen der Tellerfeder 1.

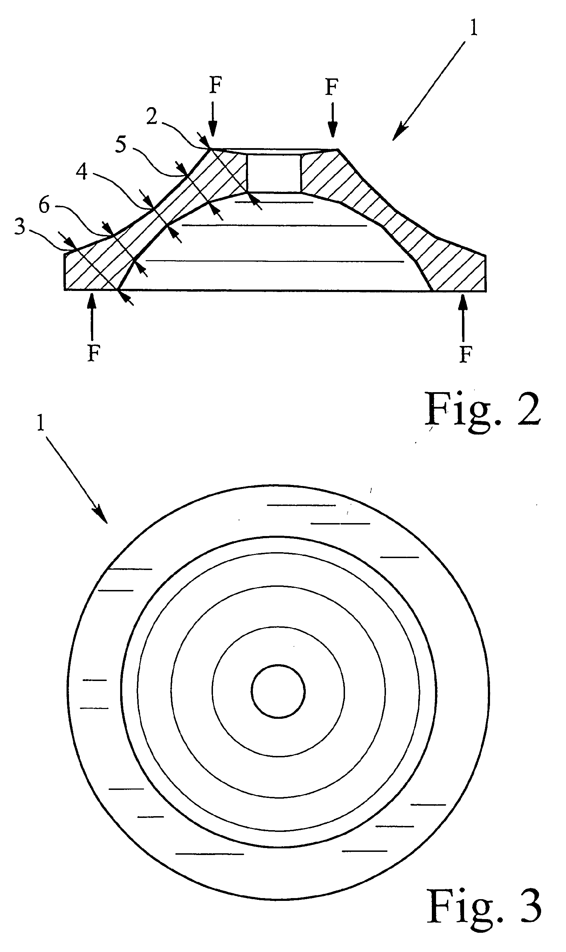

Gemäß der Fig. 2 ist die Tellerdicke der weiteren Querschnittsstelle 4 kleiner als die Tellerdicke der inneren Querschnittsstelle 2 und kleiner als die Tellerdicke der äußeren Querschnittsstelle 3. Wesentlich dabei ist, daß im Bereich hoher Beanspruchungen der Tellerfeder 1 die Tellerdicke entsprechend vergrößert ist. Im Bereich kleiner Beanspruchung der Tellerfeder 1, nämlich vorliegend im Bereich der weiteren Querschnittsstelle 4 bzw. des neutralen Punktes, weist die erfindungsgemäße Tellerfeder 1 daher die geringste Tellerdicke auf. Gemäß der Fig. 2 ist vorgesehen, daß die Tellerdicke der inneren Querschnittsstelle 2 und die Tellerdicke der äußeren Querschnittsstelle 3 im wesentlichen gleich sind. Das Dickenprofil der Tellerfeder 1 kann sich somit aus zwei spiegelsymmetrischen Hälften um die Querschnittsstelle 4 zusammensetzen. Dies ist jedoch nur eine bevorzugte Ausführungsform der erfindungsgemäßen Tellerfeder 1. Prinzipiell kann das Dickenprofil der Tellerfeder 1 an jede beliebige Beanspruchung angepaßt werden.

Unter Umständen weist die Tellerfeder 1 zwischen der inneren Querschnittsstelle 2 und der äußeren Querschnittsstelle 3 eine Mehrzahl weiterer Querschnittsstellen 5, 6 auf, mit unterschiedlich starken Tellerdicken. Im übrigen ist es nicht in jedem Beanspruchungsfall notwendig, daß die Tellerdicke der inneren Querschnittsstelle 2 und die Tellerdicke der äußeren Querschnittsstelle 3 gleich sind. Die Tellerdicke ist im wesentlichen abhängig von der an der betrachteten Stelle vorliegenden Beanspruchung der Tellerfeder 1. Dabei gilt, daß bei hoher Beanspruchung eine große Tellerdicke, bei geringer Beanspruchung dementsprechend eine kleine Tellerdicke der Tellerfeder 1 vorgegeben wird. Die Profilgestaltung dient dabei in erster Linie dem Ziel, eine gleichmäßige Spannungsverteilung über den Querschnitt der Tellerfeder 1 in den verschiedenen Querschnittsbereichen sicherzustellen.

Weiterhin ist aus der Fig. 2 ersichtlich, daß die Tellerdicke der weiteren Querschnittsstelle 4 sowohl auf der Zugspannungsseite der Tellerfeder 1 als auch auf der Druckspannungsseite der Tellerfeder 1 gegenüber der Tellerdicke der inneren Querschnittsstelle 2 und der äußeren Querschnittsstelle 3 verjüngt ist. Diese Verjüngung läßt sich beispielsweise durch eine entsprechende Profilierung des zur Herstellung der Tellerfeder 1 verwendeten Federbandes umsetzen. Selbstverständlich ist es jedoch auch möglich, die Tellerdicke der weiteren Querschnittsstelle 4 ausgehend von der Druckspannungsseite oder der Zugspannungsseite gegenüber der Tellerdicke der inneren bzw. äußeren Querschnittsstellen 2, 3 zu verjüngen.

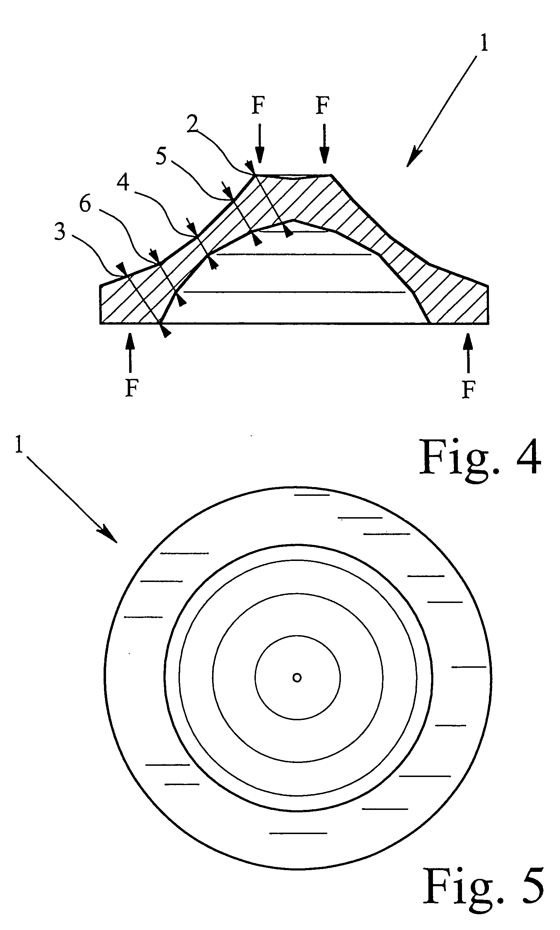

Die Fig. 4 und 5 zeigen eine zweite bevorzugte Ausführungsform einer erfindungsgemäßen Tellerfeder 1, und zwar einer ungelochten Tellerfeder. Die Abstufung der Tellerdicke kann bereichsweise in Abhängigkeit von den Punkten maximaler Beanspruchung der Tellerfeder 1 erfolgen. Es ist jedoch auch möglich, eine stufenlose Veränderung der Tellerdicke zwischen der inneren Querschnittsfläche 2 und der äußeren Querschnittsfläche 3 vorzusehen und das Dickenprofil der Tellerfeder bogenförmig gewölbt auszuführen.

Schließlich sei noch darauf hingwiesen, daß eine besonders bevorzugte Ausführungsform der erfindungsgemäßen Tellerfedern, die in den Figuren nicht dargestellt ist, dadurch gekennzeichnet ist, daß die Tellerdicke der inneren Querschnittsstelle, der äußeren Querschnittsstelle und der weiteren Querschnittsstelle, also die Tellerdicke über die gesamte Tellerfeder, so gewählt ist, daß sich eine konstante Hauptnormalspannung, also eine konstante Zugspannung, über alle Bereiche der Materialoberfläche der Tellerfedern ergibt.

## Patentansprüche

1. Tellerfeder (1) mit einer inneren Querschnittsstelle (2) in einem der Längsachse benachbarten Innenbereich der Tellerfeder (1), mit einer äußeren Querschnittsstelle (3) in einem randnahen Außenbereich der Tellerfeder (1) und mit einer zwischen der inneren Querschnittsstelle (2) und der äußeren Querschnittsstelle (3) liegenden weiteren Querschnittsstelle (4) im Bereich des neutralen Punktes, wobei im eingebauten Zustand der Tellerfeder (1) die maximale Beanspruchung im Bereich der inneren Querschnittsstelle (2) und/oder der äußeren Querschnittsstelle (3) liegt, **dadurch gekennzeichnet, daß** die Tellerdicke der weiteren Querschnittsstelle (4) kleiner als die Tellerdicke der inneren Querschnittsstelle (2) und kleiner als die Tellerdicke der äußeren Querschnittsstelle (3) ist.

2. Tellerfeder nach Anspruch 1, **dadurch gekennzeichnet, daß** die Tellerdicke der inneren Querschnittsstelle (2) kleiner als die Tellerdicke der äußeren Querschnittsstelle (3) ist oder die Tellerdicke der inneren Querschnittsstelle (2) und der äußeren Querschnittsstelle (3) im wesentlichen gleich sind.

3. Tellerfeder nach Anspruch 1 oder 2, **dadurch gekennzeichnet, daß** sich das Dickenprofil der Tellerfeder (1) zwischen der inneren Querschnittsstelle (2) und der äußeren Querschnittsstelle (3) im wesentlichen aus zwei spiegelsymmetrische Hälften um die weitere Querschnittsstelle (4) zusammensetzt.

4. Tellerfeder (1) mit einer inneren Querschnittsstelle (2) in einem der Längsachse benachbarten Innenbereich der Tellerfeder (1), mit einer äußeren Querschnittsstelle (3) in einem randnahen Außenbereich der Tellerfeder (1) und mit einer zwischen der inneren Querschnittsstelle (2) und der äußeren Querschnittsstelle (3) liegenden weiteren Querschnittsstelle (4) im Bereich des neutralen Punktes, wobei im eingebauten Zustand der Tellerfeder (1) die maximale Beanspruchung im Bereich der inneren Querschnittsstelle (2) und/oder der äußeren Querschnittsstelle (3) liegt, **dadurch gekennzeichnet, daß** die Tellerdicke der weiteren Querschnittsstelle (4) im wesentlichen der Tellerdicke der äußeren Querschnittsstelle (3) entspricht und die Tellerdicke der weiteren Querschnittsstelle (4) kleiner ist als die Tellerdicke der inneren Querschnittsstelle (2).

5. Tellerfeder (1) mit einer inneren Querschnittsstelle (2) in einem der Längsachse benachbarten Innenbereich der Tellerfeder (1), mit einer äußeren Querschnittsstelle (3) in einem randnahen Außenbereich der Tellerfeder (1) und mit einer zwischen der inneren Querschnittsstelle (2) und der äußeren Querschnittsstelle (3) liegenden weiteren Querschnittsstelle (4) im Bereich des neutralen Punktes, wobei im eingebauten Zustand der Tellerfeder (1) die maximale Beanspruchung im Bereich der inneren Querschnittsstelle (2) und/oder der äußeren Querschnittsstelle (3) liegt , **dadurch gekennzeichnet, daß** die Tellerdicke der weiteren Querschnittsstelle (4) im wesentlichen der Tellerdicke der inneren Querschnittsstelle (2) entspricht und die Tellerdicke der weiteren Querschnittsstelle (4) kleiner ist als die Tellerdicke der äußeren Querschnittsstelle (3).

6. Tellerfeder nach einem der Ansprüche 1 bis 5, **dadurch gekennzeichnet, daß** die Tellerdicke der weiteren Querschnittsstelle (4) auf der Zugspannungs-seite der Tellerfeder (1) und/oder auf der Druckspannungsseite der Tellerfeder (1) gegenüber der Tellerdicke der äußeren Querschnittsstelle (3) und/oder gegenüber der Tellerdicke der inneren Querschnittsstelle (2) verjüngt ist.

7. Tellerfeder nach einem der Ansprüche 1 bis 6, **dadurch gekennzeichnet, daß** wenigstens eine zusätzliche Querschnittsstelle (5, 6) zwischen der inneren Querschnittsstelle (2) und der weiteren Querschnittsstelle (4) und/oder zwischen der weiteren Querschnittsstelle (4) und der äußeren Querschnittsstelle (3) vorgesehen ist und die Tellerdicke der zusätzlichen Querschnittsstelle (5, 6) kleiner ist als die Tellerdicke der inneren Querschnittsstelle (2) und/oder kleiner ist als die Tellerdicke der äußeren Querschnittsstelle (3).

8. Tellerfeder nach Anspruch 7, **dadurch gekennzeichnet, daß** die Tellerdicke der zusätzlichen Querschnittsstelle (5, 6) größer als die Tellerdicke der weiteren Querschnittsstelle (4) ist.

9. Tellerfeder nach einem der Ansprüche 1 bis 8, **dadurch gekennzeichnet, daß** im Bereich maximaler Beanspruchung wenigstens eine Auflagefläche vorgesehen ist.

10. Tellerfedern nach einem der Ansprüche 1 bis 9, **dadurch gekennzeichnet, daß** die Tellerdicke der inneren Querschnittsstelle, der äußeren Querschnittsstelle und der weiteren Querschnittsstelle, also die Tellerdicke über die gesamte Tellerfeder, so gewählt ist, daß sich eine konstante Hauptnormalspannung, also eine konstante Zugspannung, über alle Bereiche der Materialoberfläche der Tellerfeder ergibt.
